# EUROPÄISCHE PATENTSCHRIFT

(11) **EP 3 720 825 B1**
(45) Veröffentlichungstag und Bekanntmachung des Hinweises auf die Patenterteilung: **23.02.2022**
(21) Anmeldenummer: 18800153.1
(22) Anmeldetag: 09.11.2018
(51) Int. Cl.: C03C 17/00, C03C 17/22

(54) **VERFAHREN ZUR HERSTELLUNG EINER BEDRUCKTEN BESCHICHTETEN SCHEIBE**
METHOD FOR PRODUCING A PRINTED AND COATED GLASS PANE
PROCÉDÉ DE FABRICATION D'UNE VITRE REVÊTUE ET IMPRIMÉE

(30) Priorität: 30.11.2017 EP 17204643
(43) Veröffentlichungstag der Anmeldung: 14.10.2020
(73) Patentinhaber: SAINT-GOBAIN GLASS FRANCE, 92400 Courbevoie (FR)
(72) Erfinder: KUSTER, Hans-Werner, 52066 Aachen (DE); JANZYK, Sebastian, 52134 Herzogenrath (DE); YEH, Li-Ya, 52511 Geilenkirchen (DE); AUVRAY, Stephane, 92150 Suresnes (FR)
(74) Vertreter: Gebauer, Dieter Edmund
(86) Internationale Anmeldenummer: PCT/EP2018/080705
(87) Internationale Veröffentlichungsnummer: WO 2019/105713

(56) Entgegenhaltungen:
- WO-A1-2015/019022
- WO-A2-2014/133929
- US-A1- 2004 086 652

## Beschreibung

Die Erfindung betrifft ein Verfahren zur Herstellung einer bedruckten, beschichteten Glasscheibe.

Aktuell gewinnt Glas als Baustoff zunehmend an Bedeutung. Architekten gestalten teilweise komplette Fassaden aus Glaselementen. Um nicht nur ästhetisch hochwertige, sondern auch gleichzeitig energetisch günstige Gebäude zu realisieren, werden beschichtete Glassubstrate eingesetzt, die zum Beispiel die Sonneneinstrahlung reduzieren und so Kosten für die Klimatisierung senken.

Es sind viele verschiedene Beschichtungen bekannt. So gibt es Gläser mit antireflektierenden Beschichtungen, thermisch verbessernde Beschichtungen (Low-E, Sonnenschutz) oder beheizbare Schichten. Viele dieser Beschichtungen sind mechanisch nicht sehr stabil und insbesondere kratzempfindlich und korrosionsanfällig. Besonders silberbasierte Schichten sind in dieser Hinsicht sehr empfindlich.

Bei der Herstellung derartiger Glaselemente für den Architekturbereich durchlaufen die Glassubstrate verschiedene Prozessschritte. Auf ein meist klares Floatglas wird in der Regel eine Beschichtung aufgebracht, die in vielen Fällen aus mehreren dünnen Schichten besteht. Nach der Beschichtung muss das Glas noch einen Vorspannprozess durchlaufen. Dazu wird es Temperaturen über 600°C ausgesetzt. Allerdings findet dieser Vorspannprozess in der Regel nicht sofort statt. Das beschichtete Glas muss daher für einige Wochen bis Monate lagerfähig sein und auch einen Transport an eine andere Verarbeitungsstätte überstehen können.

Um das beschichtete Glas zu schützen, gibt es verschiedene Ansätze. Eine Variante ist eine wiederabziehbare Folie, die die Beschichtung während der Lagerung schützt und die vor dem Vorspannen wieder abgezogen werden kann. Eine andere Lösung ist eine polymere Schutzschicht, die mit Wasser wieder abgewaschen werden kann, wie in der DE102014112822A1 beschrieben ist. Eine weitere Lösung ist eine polymere Schutzschicht, die während des Vorspannens bei den dabei anwesenden hohen Temperaturen rückstandslos entfernt wird. Die letzte Lösung wird in der US2016194516A1 beschrieben.

Im Bauglasbereich werden immer häufiger auch Scheiben verbaut mit Aufdrucken verschiedenster Art. Beispielsweise werden Gläser mit schwarzen Aufdrucken im Randbereich, die Befestigungselemente oder Sensoren verdecken, vermehrt verbaut. Die Farbe ist typischerweise eine keramische Farbe, die zur Fixierung während des Vorspannprozesses eingebrannt wird. Die Kombination eines Aufdrucks mit einer Beschichtung ist eine Herausforderung. Bei einem direkten Druck auf einer metallhaltigen Beschichtung kommt es nämlich nach dem Einbrennen zu störenden optischen Effekten.

In der WO2014/133929 wird ein Verfahren beschrieben, bei dem eine Farbe direkt auf einer metallhaltigen Beschichtung verwendet wird. Nachteil dieses Verfahrens ist, dass diese Farbe nicht direkt auf einer polymeren Schutzschicht verwendet werden kann, die die metallhaltige Beschichtung schützt. Die metallhaltige Beschichtung wäre demnach ungeschützt während Lagerung und Transport zum Drucker, der sich oft an einer anderen Produktionsstätte oder in einem anderen Betrieb befindet als die Beschichtungsanlagen.

Will man die polymere Schutzschicht mit einem Druckvorgang kombinieren, müssen die polymere Schutzschicht und die metallhaltige Beschichtung im zu bedruckenden Bereich entfernt werden. Eine Möglichkeit ist die mechanische Entfernung der Schutzschicht und der metallhaltigen Beschichtung. Anschließend kann dann in dem entschichteten Bereich die Bedruckung vorgenommen werden, während gleichzeitig im übrigen Bereich die metallhaltige Beschichtung weiterhin durch eine polymere Schutzschicht geschützt ist. Während der mechanischen Entfernung der Beschichtung mit einer geeigneten Schleifscheibe kommt es im entschichteten Bereich allerdings zu kleinen Kratzern und Beschädigungen. Diese sind insbesondere nach dem Vorspannprozess trotz der Bedruckung deutlich sichtbar und mindern das optische Erscheinungsbild. Bei dem abrasiven Abtrag ist auch eine rückstandslose Entfernung nicht immer gegeben.

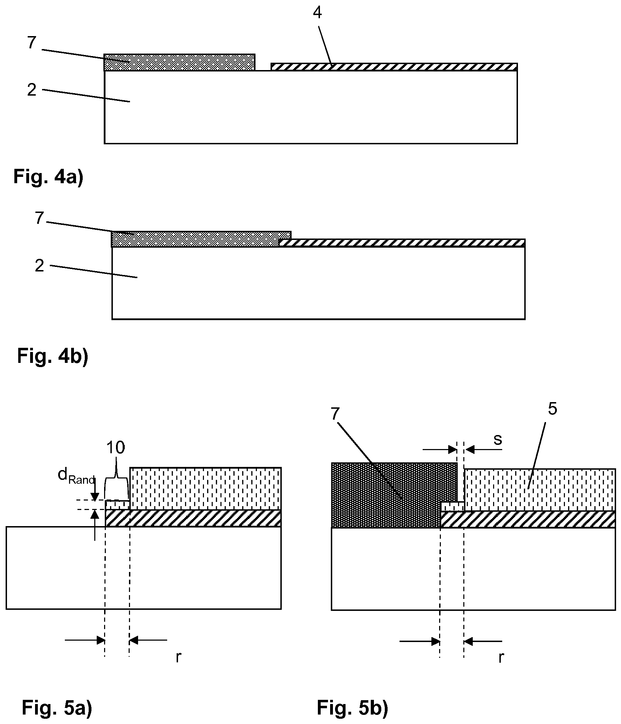

Ein weiteres Problem bei der Methode ist, dass eine exakte Positionierung des Aufdrucks an der Kante zum beschichteten Bereich notwendig ist. Ansonsten kommt es an der Grenze zwischen Druck und Beschichtung zu optischen Fehlern: Wenn der Druck zu weit von der Beschichtung entfernt ist, entsteht ein Bereich ohne Beschichtung, der heller erscheint als der Rest der Scheibe (siehe Figur 4a). Wenn der Druck über der metallhaltigen Beschichtung angebracht ist, gibt es optische Fehler im überdruckten Bereich (siehe Figur 4b). Die mechanische Entfernung liefert hier keine ausreichend scharfe Grenzlinie zwischen entschichtetem und beschichtetem Bereich. Die anschließende exakte Ausrichtung des Drucks an dieser Kante ist daher zu ungenau und die oben beschriebenen optischen Fehler treten auf.

Aufgabe der vorliegenden Erfindung ist die Bereitstellung eines verbesserten Verfahrens zur Herstellung einer beschichteten und bedruckten Glasscheibe.

Die Aufgabe wird erfindungsgemäß durch ein Verfahren nach dem unabhängigen Anspruch 1 gelöst. Bevorzugte Ausführungsformen gehen aus den Unteransprüchen hervor.

Das Verfahren zur Herstellung einer beschichteten und bedruckten Glasscheibe umfasst mindestens die folgenden Schritte in der angegebenen Reihenfolge:
a) Bereitstellen eines Glassubstrats mit einer metallhaltigen Beschichtung auf mindestens einer ersten Oberfläche und einer auf dieser metallhaltigen Beschichtung angeordneten polymeren Schutzschicht mit einer Dicke d,
b) Entfernen der polymeren Schutzschicht in einem ersten Bereich durch einen Kohlenstoffdioxidlaser,
c) Entfernen der metallhaltigen Beschichtung innerhalb des ersten Bereichs nur in einem zweiten Bereich durch einen Festkörperlaser, sodass ein Randbereich entsteht, in dem die metallhaltige Beschichtung intakt ist und in dem die polymere Schutzschicht in Schritt b) entfernt wurde,
d) Aufbringen einer keramischen Farbe im ersten Bereich,
e) Temperaturbehandlung der Glasscheibe bei >600 °C, wobei
   - die polymere Schutzschicht auf der gesamten ersten Oberfläche entfernt wird,
   - im Randbereich die metallhaltige Beschichtung durch die darüber liegende keramische Farbe gelöst wird und
   - die keramische Farbe eingebrannt wird; wobei der erste Bereich sich entlang mindestens einer Kante der Glasscheibe erstreckt und dabei, von der Scheibenkante gemessen, eine Breite b aufweist zwischen 0,5 cm und 30 cm.

Nach Schritt c) sind die polymere Schutzschicht und die metallhaltige Beschichtung außerhalb des ersten Bereichs noch intakt. Das bedeutet, dass in Schritt b) die polymere Schicht außerhalb des ersten Bereichs nicht entfernt wird. Ebenso wird in Schritt c) die metallhaltige Beschichtung außerhalb des ersten Bereichs nicht entfernt. Im gesamten zweiten Bereich sind nach Schritt c) dagegen sowohl die polymere Schutzschicht als auch die metallhaltige Beschichtung entfernt. Im Randbereich ist die metallhaltige Beschichtung noch intakt, das heißt im Randbereich wird die metallhaltige Beschichtung nicht entfernt.

In Schritt d) wird die keramische Farbe ausschließlich im ersten Bereich aufgebracht und nicht in dem mit der polymeren Schutzschicht versehenen Bereich. So werden unschöne Ergebnisse nach dem Einbrennen der Farbe vermieden.

In Schritt e) während der Temperaturbehandlung wandert die keramische Farbe im Randbereich in die dort vorhandene metallhaltige Beschichtung und verbindet sich dort mit der ersten Oberfläche der Glasscheibe. Danach wird die metallhaltige Beschichtung mit dem bloßen Auge nicht mehr als solche wahrgenommen. Der Betrachter sieht nur noch die eingebrannte keramische Farbe, die im gesamten ersten Bereich einheitlich erscheint.

Das Bereitstellen eines Glassubstrats auf dessen erster Oberfläche eine metallhaltige Beschichtung und auf dieser metallhaltigen Beschichtung eine polymere Schutzschicht angeordnet wurde in Schritt a), kann in den folgenden zwei Verfahrensschritten erfolgen:
a1) Aufbringen einer metallhaltigen Beschichtung auf eine erste Oberfläche eines Glassubstrats und
a2) Aufbringen einer polymeren Schutzschicht auf die metallhaltige Beschichtung.

Durch die Verwendung eines Kohlenstoffdioxidlasers in Schritt b) kann selektiv nur die polymere Schutzschicht in einem ersten Bereich entfernt werden. Der Kohlenstoffdioxidlaser greift die darunter liegende metallhaltige Beschichtung nicht an. Die Entfernung der polymeren Schutzschicht muss nicht zu 100% erfolgen. Es ist möglich, dass die Dicke d nur auf zum Beispiel 10% der ursprünglichen Dicke reduziert wird. Dies lässt sich im Anwendungsfall leicht anpassen. Im nachfolgenden Schritt c) wird die eventuell verbliebene polymere Schutzschicht automatisch rückstandslos entfernt.

Dank der Entfernung der polymeren Schutzschicht im ersten Bereich läuft die Entfernung der metallhaltigen Beschichtung in Schritt c) schneller ab. Dabei wird in einem Randbereich der Breite r die metallhaltige Beschichtung stehen gelassen. Der Randbereich ist der Bereich, der innerhalb des ersten Bereichs zwischen dem zweiten Bereich und dem umgebenden Bereich mit der vorhandenen polymeren Schutzschicht liegt. Der Randbereich ist somit der Zwischenbereich zwischen dem zweiten Bereich und dem mit der polymeren Schutzschicht versehenen Bereich. Der Randbereich liegt somit an einem Rand des ersten Bereichs. Im nachfolgenden Schritt d) wird die keramische Farbe im Randbereich aufgebracht. Es wird nur im ersten Bereich gedruckt, sodass eine Überdruckung der polymeren Schutzschicht vermieden wird. Das heißt, es wird ausschließlich im ersten Bereich die keramische Farbe aufgetragen und nicht in dem Bereich mit der polymeren Schutzschicht. Nach dem Trocknen der Farbe wird die Glasscheibe einer Temperaturbehandlung unterzogen. Dabei wird die metallhaltige Beschichtung im Randbereich durch die keramische Farbe gelöst. Dabei wandert die keramische Farbe in die darunter liegende metallhaltige Beschichtung. Die Farbe wird eingebrannt und verbindet sich mit der darunter liegenden Glasoberfläche. So kann das Problem der fehlerhaften Ausrichtung des Drucks im Randbereich vermieden werden. Da die metallhaltige Beschichtung im Randbereich überdruckt werden kann, entsteht keine Lücke zwischen Druck und metallhaltiger Beschichtung im Endprodukt (vgl. Figur 4a). Der in Figur 4b gezeigte Fehler tritt nicht auf, da die darunter liegende metallhaltige Beschichtung durch die keramische Farbe aufgelöst wird. Im Vergleich zu einer großflächigen Bedruckung im gesamten ersten Bereich ohne die vorherige Entfernung der metallhaltigen Beschichtung liefert dieses Verfahren bessere Ergebnisse. Die Qualität der Bedruckung im vollständig entschichteten Bereich ist besser als im Bereich mit der metallhaltigen Beschichtung. Daher liefert das erfindungsgemäße Verfahren mit einer Überdruckung der metallhaltigen Beschichtung nur im Randbereich überraschend gute Ergebnisse.

In Schritt e) wird die Glasscheibe einer Temperaturbehandlung bei >600 °C unterzogen. Dabei wird die temporäre polymere Schutzschicht auf der gesamten ersten Oberfläche entfernt und die keramische Farbe im ersten Bereich eingebrannt. Dank des erfindungsgemäßen Verfahrens wird so eine vorgespannte Glasscheibe mit einer metallhaltigen Beschichtung und einem Aufdruck in einem begrenzten ersten Bereich erhalten.

Das Verfahren kommt ohne separate Schritte für die großflächige Entfernung der polymeren Schutzschicht aus. Die polymere Schutzschicht zersetzt sich bei den hohen Temperaturen rückstandsfrei, sodass kein separater Abfall entsorgt werden muss. Gleichzeitig ist die metallhaltige Beschichtung während des Bedruckungsvorgangs durch die temporäre polymere Schutzschicht geschützt.

Dass bei Beginn der Temperaturbehandlung die polymere Schutzschicht vorhanden ist, hat einen überraschend positiven Effekt. Während der Temperaturbehandlung heizen sich der bedruckte Bereich und der mit der metallhaltigen Beschichtung beschichtete Bereich unterschiedlich stark auf. Abhängig von der Emissivität (ε = Emissionsgrad) heizt sich ein Körper auf. Die Emissivität eines Körpers gibt an, wie viel Strahlung er im Vergleich zu einem idealen Wärmestrahler, einem schwarzen Körper abgibt. Die Emissivität des idealen schwarzen Körpers ist 100%.

Der Bereich der Glasscheibe, der bedruckt ist (ε typischerweise zwischen 70% und 99%), heizt sich am stärksten auf (besonders bei einem Schwarzdruck). Die metallhaltige Beschichtung alleine hat eine sehr niedrige Emissivität (ε typischerweise zwischen 0,5 % und 4%), da sie Wärme reflektiert und sich somit wenig aufheizt. Ohne polymere Schutzschicht gäbe es somit einen großen Temperaturunterschied zwischen bedrucktem Bereich und dem Bereich mit metallhaltiger Beschichtung. Dies führt im Endprodukt zu optischen Fehlern, wie Wellenbildung im fertigen Produkt.

Dank der polymeren Schutzschicht (ε einer Glasscheibe mit metallhaltiger Beschichtung und polymerer Schutzschicht ist typischerweise größer als 40%) ist der Temperaturunterschied zwischen bedrucktem und beschichtetem Bereich kleiner. Somit erfolgt das Aufheizen der gesamten Glasscheibe gleichmäßiger als ohne die polymere Schutzschicht. Insbesondere der Unterschied beim Aufheizen zwischen dem bedruckten Bereich ohne metallhaltige Beschichtung und dem Bereich mit der metallhaltigen Beschichtung wird so verringert. Durch die gleichmäßigere Temperaturverteilung über die Glasoberfläche während der Temperaturbehandlung weist das Endprodukt weniger optische Fehler/Unregelmäßigkeiten auf. Zusätzlich sind im Vergleich zu einem Verfahren, bei dem auf die polymere Schutzschicht verzichtet wird, die Heizzeiten deutlich reduziert.

Das erfindungsgemäße Verfahren liefert somit eine Glasscheibe, die mindestens eine metallhaltige Beschichtung umfasst, die während des Druckvorgangs bis zur Temperaturbehandlung durch eine polymere Schutzschicht geschützt ist. Die einzelnen Schritte des Verfahrens können an verschiedenen Produktionsorten stattfinden. Zum Beispiel können die Schritte a) bis c) beim Glashersteller durchgeführt werden, Schritt d) beim Drucker und Schritt e) wieder beim Glashersteller. Dank der polymeren Schutzschicht bleibt die metallhaltige Beschichtung bis zur Temperaturbehandlung vor Beschädigungen und Korrosion geschützt. Das Verfahren bietet somit eine große Flexibilität.

Nach dem Stand der Technik konnte die polymere Schutzschicht bisher nur mit einem Druck kombiniert werden, wenn ein Schleifmittel zur Entschichtung eingesetzt wurde, wobei zwangsläufig kleine Kratzer im ersten Bereich entstehen. Die nach dem erfindungsgemäßen Verfahren hergestellte Scheibe weist dagegen keine Kratzer auf, da die Laser bei der Entschichtung keine störenden Beschädigungen verursachen.

In einer bevorzugten Ausführungsform des erfindungsgemäßen Verfahrens wird in Schritt d) beim Auftragen der keramischen Farbe ein Sicherheitsabstand zur polymeren Schutzschicht frei gelassen. So kann sichergestellt werden, dass keine Überdruckung der polymeren Schutzschicht erfolgt. Eine Bedruckung der polymeren Schutzschicht führt nach der Temperaturbehandlung zu einem Verschmieren der Farbe, was in unsauberen Rändern der Bedruckung resultiert. Um dies zu vermeiden wird die keramische Farbe mit einem Abstand s von mindestens 0,5 mm, bevorzugt 1 mm zu der verbliebenen polymeren Schutzschicht aufgebracht. Dieser Abstand ist ausreichend, um sicher zu stellen, dass es nicht zu einer teilweisen Überdruckung kommt.

Das Glassubstrat ist bevorzugt ein klares oder gefärbtes Floatglas. Die Dicke des Glassubstrats liegt zwischen 2 mm und 20 mm, bevorzugt zwischen 4 mm und 10 mm. Übliche Dicken sind 2 mm, 3 mm, 4 mm, 5 mm, 6 mm, 8 mm, 10 mm, 12 mm, 15 mm und 19 mm.

Das Glassubstrat hat eine erste Oberfläche und eine gegenüberliegende zweite Oberfläche. Bevorzugt wurde nur die erste Oberfläche mit einer metallhaltigen Beschichtung versehen.

Alternativ bevorzugt wurden die erste Oberfläche und die zweite Oberfläche mit einer metallhaltigen Beschichtung versehen. In diesem Fall wurden bevorzugt beide Oberflächen mit einer polymeren Schutzschicht versehen.

Die Glasscheibe ist insbesondere als Fensterscheibe für Gebäudeverglasung vorgesehen.

Die metallhaltige Beschichtung im Sinne der vorliegenden Erfindung ist eine Beschichtung, die mindestens eine funktionelle Schicht enthaltend eine Metallverbindung umfasst. Die metallhaltige Beschichtung ist bevorzugt eine heizbare Beschichtung oder IR-reflektierende Beschichtung. Die metallhaltige Beschichtung kann eine einzelne funktionelle Schicht sein, ist aber typischerweise ein Mehrschichtsystem. Die Beschichtung umfasst mindestens eine funktionelle Schicht. Typischerweise umfasst die metallhaltige Beschichtung dielektrische Schichten und weitere Schichten, die als Entspiegelungsschichten, Blockerschichten oder Oberflächenanpassungsschichten die optischen, elektrischen und / oder mechanischen Eigenschaften der metallhaltigen Beschichtung optimieren. Die mindestens eine funktionelle Schicht kann ein Metall oder eine Metalllegierung oder ein Oxid enthalten. In einer bevorzugten Ausgestaltung enthält die mindestens eine funktionelle Schicht Silber. Der Silberanteil der funktionellen Schicht beträgt bevorzugt größer 50% (Gewichtsprozent), besonders bevorzugt größer 90% (Gewichtsprozent). Die funktionelle Schicht besteht ganz besonders bevorzugt im Wesentlichen aus Silber, abgesehen von etwaigen Verunreinigungen oder Dotierungen. Die metallhaltige Beschichtung kann bevorzugt mehrere funktionelle Schichten enthalten, die durch dielektrische Schichten voneinander getrennt sind. Die metallhaltige Beschichtung enthält bevorzugt mindestens zwei, besonders bevorzugt zwei oder drei, funktionelle Schichten, insbesondere silberhaltige Schichten. Typische Materialien, die für die dielektrischen Schichten der metallhaltigen Beschichtung gebräuchlich sind, sind beispielsweise Siliziumnitrid, Siliziumoxid, Zinkoxid, Zinn-Zink-Oxid und Aluminiumnitrid. Die metallhaltige Beschichtung ist typischerweise ein Dünnschichtstapel. Typische Dicken der Beschichtung betragen kleiner 1 µm. Typische Dicken der funktionellen Schichten liegen im Bereich von 5 nm bis 50 nm für silberhaltige Schichten. Geeignete Mehrschichtsysteme sind zum Beispiel in der US2011027554A1 und in der US20060257670A1 beschrieben. Geeignete beschichtete Glassubstrate werden von SAINT GOBAIN GLASS unter dem Namen COOL-LITE^{®} vertrieben, insbesondere COOL-LITE^{®} SKN und COOL LITE^{®} XTREME.

Die metallhaltige Beschichtung kann nach den bekannten Verfahren aufgebracht werden, wie zum Beispiel über Magnetronsputtern, chemische Gasphasenabscheidung (CVD), plasmaunterstützte CVD (PECVD), Pyrolyse, Sol-Gel-Verfahren oder nasschemische Verfahren. Bevorzugt wird die metallhaltige Beschichtung über Magnetronsputtern abgeschieden.

Die polymere Schutzschicht im Sinne der Erfindung hat bevorzugt eine Dicke von mindestens 1 µm, ist nicht wasserlöslich und wird aus einer Zusammensetzung hergestellt, die Meth(acrylate) enthält. Nicht wasserlöslich bedeutet, dass die Schutzschicht auch einen üblichen Waschvorgang der Scheibe übersteht. Die polymere Schutzschicht ist eine temporäre polymere Schutzschicht. Die Bezeichnung temporär gibt an, dass die Schutzschicht nur zum Schutz bei der Lagerung oder Transport der Glasscheibe angebracht ist. Geeignete Schutzschichten sind in der US2016194516A1 beschrieben. Die polymere Schutzschicht im Sinne der Erfindung ist nicht abziehbar ("peelable), sondern wird durch thermische Zersetzung entfernt.

Der erste Bereich ist der Bereich, der für eine Bedruckung mit einer keramischen Farbe vorgesehen ist. Der erste Bereich ist ein flächiger Bereich auf der Oberfläche des Glassubstrats. Die Größe, die äußere Form und die Position des ersten Bereichs sind frei wählbar.

Die keramische Farbe, auch Emaille genannt, wird während des Vorspannprozesses auf das Glas aufgeschmolzen und bildet eine feste Bindung mit der Glasmatrix. Üblicherweise enthält eine keramische Farbe als Komponenten Glasbildner (Siliciumdioxid (SiO₂) und/oder Bortrioxid (B₂O₃), Flussmittel, die die Schmelze beeinflussen (z.B. Na₂O, K₂O, Li₂O, CaO, MgO, SrO, BaO), und weitere Oxide wie Aluminiumoxid, Zinkoxid, Zirkoniumoxid. Zusätzlich werden anorganische Farbpigmente zur Farbgebung eingesetzt. Die Bestandteile können in einem Medium suspendiert sein, um den Druckvorgang zu ermöglichen. Hier kommen organische und/oder wässrige Lösungen in Frage. Die keramische Farbe für das erfindungsgemäße Verfahren enthält zusätzlich noch Bestandteile, die die Lösung der metallhaltigen Beschichtung ermöglichen in Schritt e) des erfindungsgemäßen Verfahrens. Durch einen chemischen Prozess während der Temperaturbehandlung können in der Farbe enthaltene Partikel in die darunterliegende Beschichtung wandern. Dadurch wird die metallhaltige Beschichtung gelöst oder entfernt, wodurch Blasenbildung oder Gasbildung beobachtet werden können. Die genannten Partikel können Fluor-basierte und/oder Bismuthbasierte Partikel enthalten. US2011/0233481 offenbart eine fluorierte Silberpaste zur Bildung elektrischer Anschlüsse in dielektrischen Schichten indem sie sich sozusagen durch die Schichten frisst. Die keramische Farbe kann im Siebdruckverfahren, Walzverfahren (auch Rollercoaterverfahren genannt) oder Digitaldruckverfahren aufgebracht werden. Bevorzugt werden opake keramische Farben eingesetzt.

In einer weiteren bevorzugten Ausführungsform des erfindungsgemäßen Verfahrens ist die polymere Schutzschicht nicht wasserlöslich und wird aus einer Zusammensetzung hergestellt, die Meth(acrylate) enthält. Dadurch schützt die Schutzschicht besonders gut vor Nässe und bleibt auch während der üblichen Waschvorgänge intakt. Die polymere Schutzschicht wird durch Trocknen, IR- oder UV-Bestrahlung oder durch Elektronenstrahlvernetzung gehärtet bzw. vernetzt.

Die Bezeichnung Meth(acrylate), bezieht sich auf Ester der Acrylsäure oder Methacrylsäure enthaltend mindestens eine Acryloyl (CH₂=CH-CO-) oder Methacryloyl (CH₂=CH(CH₃)-CO-)-Funktion. Diese Ester können Monomere, Oligomere, Prepolymere oder Polymere sein. Werden diese Meth(acrylate) unter Polymerisierungsbedingungen umgesetzt, erhält man ein Polymernetzwerk mit einer festen Struktur.

Bevorzugt hat die polymere Schutzschicht eine Dicke d von 1 µm bis 30 µm, bevorzugt 15 µm bis 20 µm. Bei diesen Dicken wird eine ausreichende Kratzfestigkeit erzielt, um während Lagerung und Transport die darunter liegende Schicht zu schützen. Die Dicke d der polymeren Schutzschicht bezeichnet die Dicke der polymeren Schutzschicht zu Beginn des Verfahrens.

Bevorzugt wird die Dicke der polymeren Schutzschicht im Randbereich d_{Rand} in Schritt b) soweit reduziert, dass sie nach Schritt b kleiner als 1 µm, bevorzugt kleiner als 0,5 µm ist. Bei diesen geringen Restdicken kann die in Schritt d) darüber angebrachte keramische Farbe in Schritt e) erfolgreich eingebrannt werden. Das auf diese Weise erhaltene Druckbild ist überraschenderweise sehr gut. Es ist leichter die polymere Schutzschicht bis auf eine geringe Restdicke zu entfernen, als die Parameter für die vollständige Entfernung zu optimieren, wenn bei beiden Vorgehen ein zufriedenstellendes Ergebnis erzielt wird.

In einer bevorzugten Ausführungsform des erfindungsgemäßen Verfahrens wird die Glasscheibe bei der weiter oben beschriebenen Temperaturbehandlung thermisch vorgespannt, wobei insbesondere Einscheibensicherheitsglas (ESG) oder teilvorgespanntes Glas (TVG) erhalten wird. Dabei wird nach dem Aufheizen der Glasscheibe auf Temperaturen über 600°C, bevorzugt 620°C bis 700°C, die Glasscheibe von den Oberflächen her rasch abgekühlt. Üblicherweise erfolgt das Abkühlen durch Anblasen mit Luft. Dabei erzeugt man im Inneren der Glasscheibe eine permanente Zugspannung und an den Oberflächen und an den Rändern eine permanente Druckspannung. Thermisch vorgespanntes Glas hat daher eine höhere mechanische Zerstörschwelle als nichtvorgespanntes Floatglas. Einscheibensicherheitsglas soll im Allgemeinen einen Vorspanngrad an der Oberfläche von mindestens 69 MPa aufweisen. Bei teilvorgespanntem Glas werden im Allgemeinen Oberflächendruckspannungen von 24-52 MPa erreicht.

In einer weiteren bevorzugten Ausführungsform des erfindungsgemäßen Verfahrens wird die keramische Farbe mit einem Roll-Coater oder einem Digitaldrucker aufgebracht. Der Auftrag im Walzverfahren mit einem Roll-Coater ist besonders vorteilhaft im Zusammenhang mit einer flächigen Randbedruckung. Dabei wird die Farbe mit einer gerillten Gummiwalze auf die Glasscheibe aufgetragen. Bei genauer Betrachtung ist die gerillte Struktur der Walze auf der Seite des Farbauftrags sichtbar. Beim Digitaldruckverfahren wird die keramische Farbe wie bei einem Tintenstrahldrucker auf die Glasoberfläche aufgebracht. Dieses Verfahren eignet sich besonders für komplexe oder mehrfarbige Designs oder Bilder.

In einer weiteren bevorzugten Ausführungsform des erfindungsgemäßen Verfahrens wird vor dem Aufbringen der keramischen Farbe der erste Bereich einer Plasmareinigung unterzogen. Dabei werden eventuell vorhandene oberflächlich anhaftende Verschmutzungen entfernt. Gleichzeitig wird die Oberfläche optimal vorbereitet für den anschließenden Farbauftrag. Bevorzugt wird die Reinigung mit atmosphärischem Plasma, bei der das Glas sofort weiterverarbeitet werden kann. Das mit diesem Verfahren erhaltene Produkt weist einen noch besseren Druck auf und ist insbesondere vorteilhaft in Kombination mit komplexeren Aufdrucken, die zum Beispiel von einem Digitaldrucker erzeugt werden. Da die Dicke des von einem Digitaldrucker erzeugten Farbfilms dünner ist als die von einem Roll-Coater erzeugten Farbfilms, ist eine besonders gereinigte Oberfläche vorteilhaft.

Alternativ oder ergänzend zur Plasmareinigung kann die gesamte Scheibe vor der Bedruckung gewaschen und getrocknet werden. Übliche wässrige Waschlösungen oder reines Wasser können eingesetzt werden.

In einer bevorzugten Ausführungsform des erfindungsgemäßen Verfahrens hat der unbedruckte Bereich mit der metallhaltigen Beschichtung und der polymeren Schutzschicht eine Emissivität ε (epsilon) von größer als 40% hat, bevorzugt größer als 45%. Bei diesen Werten ist der Unterschied zum bedruckten Bereich, der typischerweise eine Emission von größer 70% hat, nicht so groß. Dies führt zu sehr guten Ergebnissen nach der Temperaturbehandlung. Dabei treten weniger Verwerfungen / Wellenbildungen auf als bei geringeren Werten für die Emissivität.

In einer weiteren bevorzugten Ausführungsform des erfindungsgemäßen Verfahrens hat der Randbereich eine Breite r von 0,1 mm bis 10 mm, bevorzugt von 0,5 mm bis 5 mm. Bei dieser Breite des Randbereichs wird das Ergebnis nach der Überdruckung besonders gut. Bei Randbereichen, die breiter sind als 10 mm, werden schlechtere Ergebnisse erzielt, da die Lösung der darunter liegenden metallhaltigen Beschichtung bei großen Flächen nicht zu optimalen Ergebnissen führt. Besonders bevorzugt hat der Randbereich eine Breite r von 1 mm bis 2 mm. Dieser kleine Bereich reicht bereits, um die bei der Ausrichtung des Drucks auftretenden Toleranzen auszugleichen. Das Druckergebnis ist bei diesen geringen Breiten hervorragend.

In einer weiteren bevorzugten Ausführungsform des erfindungsgemäßen Verfahrens erfolgt die Aufbringung der keramischen Farbe kameragesteuert im ersten Bereich, wobei die Kamera einen Unterschied zwischen dem entschichteten zweiten Bereich und dem mit der polymeren Schutzschicht versehenen Bereich detektiert. Durch die Ausrichtung des Druckers mithilfe einer Kamera kann die Anzahl der Fehler bei der Bedruckung weiter reduziert werden. Insbesondere wird so vermieden, dass unbedruckte oder überdruckte Bereiche auftreten, die das optische Erscheinungsbild stören (siehe Figur 4).

In einer weiteren bevorzugten Ausführungsform des erfindungsgemäßen Verfahrens ist die Glasscheibe zwischen 1 m² und 54 m² groß. Für große Glasscheiben ist das erfindungsgemäße Verfahren von besonderem Vorteil, weil aufgrund der Anwesenheit der polymeren Schutzschicht während des Vorspannprozesses, ein gleichmäßigeres Aufheizen der Glasscheibe erfolgt und die Heizzeiten reduziert werden können. Bevorzugt ist die Glasscheibe zwischen 3 m² und 40 m² groß. Besonders bevorzugt hat die Glasscheibe eine Größe zwischen 10 m² und 30 m².

In dem erfindungsgemäßen Verfahren erstreckt sich der erste Bereich entlang mindestens einer Kante der Glasscheibe und weist dabei, von der Scheibenkante gemessen, eine Breite b auf zwischen 0,5 cm und 30 cm, bevorzugt zwischen 1 cm und 20 cm, besonders bevorzugt zwischen 2 cm und 10 cm. Bevorzugt wird die Bedruckung entlang aller Kanten der Scheibe ausgeführt. Dies führt bei einer rechteckigen Scheibe zu einer rahmenartigen Bedruckung der Scheibe mit einem Abdeckdruck am Rand der Scheibe. Diese rahmenartige Bedruckung dient meist zur Abdeckung von Befestigungsmitteln der Scheibe. Bevorzugt hat der Rahmen entlang aller Scheibenkanten die gleiche Breite. Besonders in Verbindung mit einer rahmenartigen Bedruckung ist das erfindungsgemäße Verfahren von Vorteil, da sich aufgrund der Temperaturunterschiede in Schritt e) ohne die polymere Schutzschicht Verwerfungen/Wellen im Glas zeigen. Dies wird durch den Temperaturunterschied zwischen innerem Bereich und umliegenden bedruckten Bereich erzeugt.

In einer weiteren bevorzugten Ausführungsform des erfindungsgemäßen Verfahrens hat die metallhaltige Beschichtung eine IR-reflektierende Funktion und enthält mindestens zwei silberhaltige Schichten und mindestens drei dielektrische Schichten. Die silberhaltigen Schichten bestehen aus Silber oder einer Silberverbindung. IR-reflektierend bedeutet, dass insbesondere der Teil des Sonnenspektrums im nichtsichtbaren Bereich zwischen 780 nm und 2500 nm zu einem großen Teil reflektiert wird. So wird bei Gebäudeverglasung oder Fahrzeugverglasung effektiv ein Aufheizen des Innenraums vermieden. Bevorzugt sind die mindestens zwei silberhaltigen Schichten und die mindestens drei dielektrischen Schichten so angeordnet, dass jede silberhaltige Schicht von zwei dielektrischen Schichten umgeben ist, die Schichten also abwechselnd angeordnet sind.

In einer bevorzugten Ausführungsform des erfindungsgemäßen Verfahrens werden die in den Schritten b) und c) bei der Entschichtung mit einem Laser entstehenden Partikel mit einer Absaugvorrichtung abgesaugt.

Bevorzugt findet die Laserbearbeitung in den Schritten b) und c) unter Atmosphärenbedingungen statt. Ein Ausschluss von Sauerstoff ist überraschenderweise nicht erforderlich. Durch die Anwesenheit der polymeren Schutzschicht ist die metallhaltige Beschichtung an den Grenzen des ersten Bereichs überraschenderweise ausreichend vor Korrosion geschützt. Ohne die Anwesenheit der temporären polymeren Schutzschicht würde die metallhaltige Beschichtung durch den anwesenden Sauerstoff und den hohen Energieeintrag durch den Laser oxidieren. Es ist somit überraschenderweise keine separate Kammer mit Schutzgasatmosphäre notwendig.

Das Lasern erfolgt mittels mindestens eines 2D-Laserscanners. Diese Laserscanner sind senkrecht zur Oberfläche des beschichteten Glassubstrats angeordnet. Der 2D-Laserscanner verfügt über einen maximalen Arbeitsbereich von 3 m Breite und 18 m Länge. Der 2D-Laserscanner kann auf einer Achse montiert werden, so dass dieser im gesamten Arbeitsbereich entsprechend beweglich ist.

Bei Verwendung eines 2D-Laserscanners trifft der von der Laserquelle erzeugte Laserstrahl auf einen Strahlaufweiter und wird von dort über einen Spiegel zum 2D-Laserscanner umgelenkt.

Als Laserquelle für Schritt b) wird ein Kohlenstoffdioxidlaser eingesetzt. Der Kohlenstoffdioxidlaser hat eine Wellenlänge von 10600 nm und ist besonders kostengünstig. Daher lohnt es sich zunächst den Kohlenstoffdioxidlaser einzusetzen, um selektiv die polymere Schutzschicht zu entfernen.

Als Laserquelle für Schritt c) werden bevorzugt gepulste Festkörperlaser oder Faserlaser eingesetzt. Besonders bevorzugt wird ein Neodym-dotierter Yttrium-Aluminium-Granat-Laser (Nd:YAG-Laser) verwendet. Alternativ können auch Ytterbium (Yb:YAG-Laser) oder Erbium (Er:YAG-Laser) als Dotierungsmaterialien verwendet werden oder Titan: Saphir-Laser oder Neodym-dotierte Yttrium-Vanadat-Laser (Nd:YV04-Laser) eingesetzt werden. Der Nd:YAG-Laser emittiert infrarote Strahlung einer Wellenlänge von 1064 nm. Durch Frequenzverdopplung bzw. Frequenzverdreifachung kann jedoch auch Strahlung der Wellenlängen 532 nm und 355 nm erzeugt werden.

Das Lasern erfolgt mit einer Wellenlänge von 300 nm bis 1300 nm. Die eingesetzte Wellenlänge hängt dabei von der Art der Beschichtung ab. Der bevorzugt verwendete Nd:YAG-Laser kann Laserstrahlung der Wellenlängen 355 nm, 532 nm und 1064 nm bereitstellen. Für die Bearbeitung von Silberbeschichtungen wird bevorzugt eine Wellenlänge von 532 nm eingesetzt.

Das Lasern erfolgt bevorzugt mit einer Leistung von 1 W bis 150 W, besonders bevorzugt mit einer Leistung von 10 W bis 100 W.

### Kurzdarstellung der Zeichnungen

Im Folgenden wird die Erfindung anhand von Zeichnungen und Ausführungsbeispielen näher erläutert. Die Zeichnungen sind schematische Darstellungen und nicht maßstabsgetreu. Die Zeichnungen schränken die Erfindung in keiner Weise ein.

Es zeigen:
Fig. 1 eine Draufsicht auf eine Glasscheibe hergestellt nach einem erfindungsgemäßen Verfahren,
Fig. 2 ein Querschnitt durch einen Teil einer Glasscheibe hergestellt nach dem erfindungsgemäßen Verfahren,
Fig. 3 eine schematische Darstellung eines erfindungsgemäßen Verfahrens,
Fig. 4 eine schematische Darstellung von Fehlern, die bei der Bedruckung von Glasscheiben auftreten können und
Fig. 5 eine vergrößerte Darstellung des Bereichs A aus Figur 3.

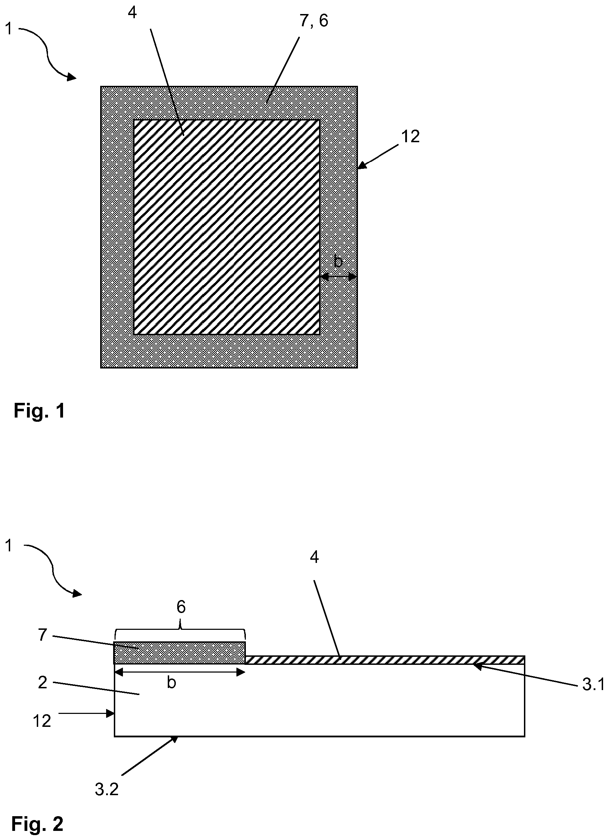

In Figur 1 ist eine Draufsicht auf eine Glasscheibe 1 hergestellt mit dem erfindungsgemäßen Verfahren gezeigt. In Figur 2 ist ein Querschnitt durch einen Bereich der Glasscheibe 1 dargestellt. Die Glasscheibe 1 ist gezeigt nach der Temperaturbehandlung des erfindungsgemäßen Verfahrens. Die Glasscheibe 1 ist eine 2 m × 1 m große Glasscheibe mit einer Dicke von 6 mm. Das Glassubstrat 1 ist ein klares Floatglas, wie es zum Beispiel von SAINT GOBAIN GLASS unter dem Namen PLANICLEAR^{®} vertrieben wird. Auf der ersten Oberfläche 3.1 des Glassubstrats ist eine silberhaltige IR-reflektierende Beschichtung 4 aufgetragen. Die Beschichtung 4 enthält zwei funktionelle Silberschichten, die alternierend mit 3 dielektrischen Schichten angeordnet sind. Die gesamte Dicke der metallhaltigen Beschichtung 4 liegt zwischen bei etwa 150 nm. Im ersten Bereich 6 ist eine schwarze Keramikfarbe 7 eingebrannt. Der erste Bereich 6 bildet einen Rahmen um die Glasscheibe 1 mit einer Breite b von 10 mm. Der Rahmen dient als Abdeckdruck, hinter dem die Befestigungsmaterialien und der Randverbund der fertigen Isolierglasscheibe verborgen werden.

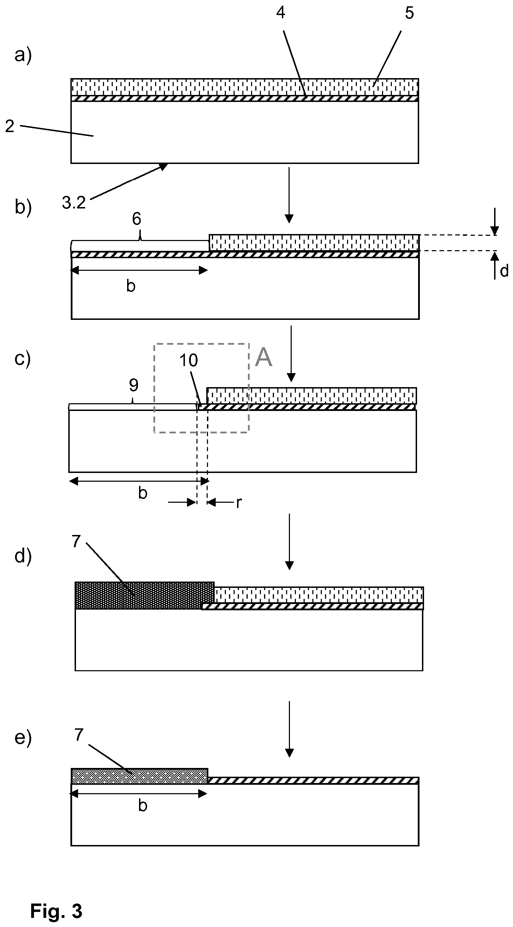

In Figur 3 ist eine schematische Darstellung des erfindungsgemäßen Verfahrens gezeigt. In Schritt a) geht man von einem 6 mm dicken Glassubstrat 2 aus mit einer insgesamt 200-250 nm dicken metallhaltigen Beschichtung 4 mindestens umfassend drei Silberschichten und vier dielektrische Schichten. Dabei ist die metallhaltige Beschichtung 4 durch eine 15 µm dicke polymere Schutzschicht 5 abgedeckt. Die polymere Schutzschicht 5 ist aus einer Zusammensetzung hergestellt, die Meth(acrylate) enthält und wurde unter UV-Bestrahlung vernetzt. Die polymere Schutzschicht 5 hat eine Dicke d von 15 µm. Eine geeignete polymere Schutzschicht 5 wird von SAINT GOBAIN GLASS unter dem Namen EASYPRO^{®} angeboten. Die erste Oberfläche 3.1 des Glassubstrats 2 ist vollflächig mit den Schichten 4 und 5 versehen. In Schritt b) wird mit einem 2D Laserscanner mit einem Kohlenstoffdioxidlaser im ersten Bereich 6 mit der Breite b=20 mm die polymere Schutzschicht 5 entfernt bis auf eine verbleibende Restdicke von d_{Rand}=0,5 µm. Der mit einer unterbrochenen Linie umrandete Bereich A ist in Figur 5a zur Veranschaulichung vergrößert gezeigt. In Schritt c) wird mit einem 2D Laserscanner mit einem Festkörperlaser der zweite Bereich 9 entschichtet. Dabei werden die metallhaltige Beschichtung 4 und die Restdicke von 1 µm im gesamten zweiten Bereich 9 entfernt. Dazu entschichtet der Festkörperlaser einen kleineren zweiten Bereich 9, der innerhalb des ersten Bereichs 6 liegt. Die Schritte b) und c) finden unter Umgebungsbedingungen ohne Ausschluss von Sauerstoff statt. Nach Schritt c) ist im gesamten zweiten Bereich 9 die metallhaltige Beschichtung und die polymere Schutzschicht entfernt. Im Randbereich 10 mit der Breite r = 1 mm ist die metallhaltige Beschichtung 4 noch vorhanden sowie ein verbliebener Rest der polymeren Schutzschicht der Dicke d_{Rand} von 0,5 µm. Im folgenden Schritt d) wird eine schwarze Keramikfarbe 7 im ersten Bereich 6 aufgetragen. Dabei ist es für ein optimales Ergebnis wichtig, dass keine Überdruckung der polymeren Schutzschicht 5 in der ursprünglichen Dicke d=15 µm stattfindet. Um dies sicherzustellen, wird ein Sicherheitsabstand s von 0,5 mm freigelassen. Dies ist in Figur 5b) schematisch dargestellt für den gleichen Ausschnitt wie in Figur 5a). Im letzten Schritt e) wird die Scheibe 1 einer Temperaturbehandlung bei 690°C für 8 Minuten unterzogen. Dabei wird die Scheibe gleichzeitig vorgespannt, die polymere Schutzschicht 5 wird rückstandslos entfernt und die keramische Farbe 7 löst die verbliebene metallhaltige Farbe im Randbereich und verbindet sich mit der Glasoberfläche.

Figur 4 zeigt zwei Fehlerbilder, die durch eine fehlerhafte Ausrichtung des Drucks entstehen können, wenn nicht das erfindungsgemäße Verfahren angewandt wird. In Figur a) ist der Druck nicht exakt angrenzend an die metallhaltige Beschichtung angebracht, sodass eine helle Linie entlang des Drucks entsteht, die das optische Erscheinungsbild des Produktes stört. In Figur b) ist der Druck teilweise überlappend mit der metallhaltigen Beschichtung 4 angebracht, was ebenfalls zu optischen Fehlern führt. Durch die teilweise Überdruckung der metallhaltigen Beschichtung 4 im Randbereich 10 können solche Fehlerbilder nach dem erfindungsgemäßen Verfahren verhindert werden.

Im Folgenden werden die Vorteile des erfindungsgemäßen Verfahrens (Beispiel) im Vergleich mit einem herkömmlichen Verfahren (Vergleichsbeispiel) erläutert.

In beiden Fällten wurde ein 1 m × 2 m großes Glassubstrat aus klarem Floatglas mit derselben silberhaltigen Beschichtung umfassend 3 funktionelle Silberschichten hergestellt. Es wurde eine schwarze Randbedruckung in Form eines Rahmens mit verschiedenen Breiten b angebracht. Die Scheiben wurden nach der Bedruckung vorgespannt bei einer Temperatur von 690 °C für eine Dauer von 500 Sekunden. Die thermische Emissivität wurde mit einem INGLAS TIR100-2 bestimmt.

### Beispiel

Glasscheibe: 1 m x 2 m klares Floatglas
Metallhaltige Beschichtung: enthält 3 Silberschichten
Polymere Schutzschicht: 15 µm SGG EasyPro^{®}; auf (Meth)acrylaten basierende Schicht Emissivität des unbedruckten Bereichs (metallhaltige Beschichtung und polymere
Schutzschicht; gemessen vor der Temperaturbehandlung): 45 %
Emissivität des bedruckten Bereichs (gemessen nach der Temperaturbehandlung): 89 %

### Vergleichsbeispiel

Glasscheibe: 2 m × 1 m klares Floatglas
Metallhaltige Beschichtung: enthält 3 Silberschichten
Emissivität des unbedruckten Bereichs (nur metallhaltige Beschichtung; gemessen vor der Temperaturbehandlung): 2 %
Emissivität des bedruckten Bereichs (gemessen nach der Temperaturbehandlung): 89 %

| | Deformation in mm gemessen in 5 mm Abstand von der Kante der Glasscheibe | |
|---|---|---|
| Breite b des Rahmens in mm | Beispiel (mit polymerer Schutzschicht) | Vergleichsbeispiel (ohne polymere Schutzschicht) |
| 24 | keine | 0,10 |
| | | |
| 96 | 0,05 | 0,15 |
| | | |
| 192 | 0,10 | Glasbruch |
| | | |

Die Deformation wurde als Dickenänderung der Glasscheibe in 5 mm Abstand zur Kante gemessen. Der Vergleich zeigt, dass das erfindungsgemäße Verfahren zu wesentlich geringeren bzw. gar keinen Deformationen im bedruckten Bereich führt. Bei größeren Rahmenbedruckungen kommt es ohne die Verwendung einer Schutzschicht sogar zu einem Bruch des Glases.

### Bezugszeichenliste

- 1: Glasscheibe
- 2: Glassubstrat
- 3.1: erste Oberfläche des Glassubstrats
- 3.2: zweite Oberfläche des Glassubstrats
- 4: metallhaltige Beschichtung
- 5: polymere Schutzschicht, temporäre Schutzschicht
- 6: erster Bereich, zu bedruckender Bereich, bedruckter Bereich
- 7: keramische Farbe
- 9: zweiter Bereich
- 10: Randbereich
- 12: eine Scheibenkante
- b: Breite des ersten Bereichs
- d: Dicke der polymeren Schutzschicht zu Beginn des Verfahrens
- d_{Rand}: Dicke der polymeren Schutzschicht im Randbereich nach Schritt b)
- r: Breite des Randbereichs
- s: Abstand zwischen keramischer Farbe und polymerer Schutzschicht

## Patentansprüche

1. Verfahren zur Herstellung einer beschichteten und bedruckten Glasscheibe (1), mindestens umfassend die Schritte
a) Bereitstellen eines Glassubstrats (2) mit einer metallhaltigen Beschichtung (4) auf mindestens einer ersten Oberfläche (3.1) und einer auf dieser metallhaltigen Beschichtung (4) angeordneten polymeren Schutzschicht (5) mit einer Dicke d,
b) Entfernen der polymeren Schutzschicht (5) in einem ersten Bereich (6) durch einen Kohlenstoffdioxidlaser,
c) Entfernen der metallhaltigen Beschichtung (4) innerhalb des ersten Bereichs (6) nur in einem zweiten Bereich (9) durch einen Festkörperlaser, sodass ein Randbereich (10) entsteht, in dem die metallhaltige Beschichtung (4) intakt ist und in dem die polymere Schutzschicht (5) in Schritt b) entfernt wurde,
d) Aufbringen einer keramischen Farbe (7) nur im ersten Bereich (6),
e) Temperaturbehandlung der Glasscheibe (1) bei >600 °C, wobei die polymere Schutzschicht (5) auf der gesamten ersten Oberfläche (3.1) entfernt wird und die keramische Farbe (7) im Randbereich (10) in die metallhaltige Beschichtung (4) wandert und sich mit der ersten Oberfläche (3.1) der Glasscheibe (1) verbindet,
wobei der erste Bereich (6) sich entlang mindestens einer Kante (12) der Glasscheibe (1) erstreckt und dabei, von der Scheibenkante (12) gemessen, eine Breite b aufweist zwischen 0,5 cm und 30 cm.

2. Verfahren nach Anspruch 1, wobei in Schritt d) die keramische Farbe (7) im Randbereich (10) mit einem Abstand s von mindestens 0,5 mm zu der verbliebenen polymeren Schutzschicht (5) aufgebracht wird.

3. Verfahren nach einem der vorhergehenden Ansprüche, wobei die polymere Schutzschicht (5) nicht wasserlöslich ist und aus einer Zusammensetzung hergestellt wird, die Meth(acrylate) enthält.

4. Verfahren nach einem der vorhergehenden Ansprüche, wobei die polymere Schutzschicht (5) eine Dicke d von 1 µm bis 30 µm, bevorzugt 15 µm bis 20 µm hat.

5. Verfahren nach einem der vorhergehenden Ansprüche, wobei die Dicke der polymeren Schutzschicht (5) im Randbereich d_{Rand} nach Schritt b) kleiner als 1 µm ist, bevorzugt kleiner als 0,5 µm.

6. Verfahren nach einem der vorhergehenden Ansprüche, wobei die Glasscheibe (1) bei der Temperaturbehandlung thermisch vorgespannt wird, wobei insbesondere Einscheibensicherheitsglas oder teilvorgespanntes Glas erhalten wird.

7. Verfahren nach einem der vorhergehenden Ansprüche, wobei die keramische Farbe (7) mit einem Roll-Coater oder einem Digitaldrucker aufgebracht wird.

8. Verfahren nach einem der vorhergehenden Ansprüche, wobei vor dem Aufbringen der keramischen Farbe (7) der erste Bereich (6) einer Plasmareinigung unterzogen wird.

9. Verfahren nach einem der vorhergehenden Ansprüche, wobei der Bereich mit der metallhaltigen Beschichtung (4) und der polymeren Schutzschicht (5) eine Emissivität ε (epsilon) von größer als 40% hat, bevorzugt größer als 45%, wobei die Emissivität eines Körpers angibt, wie viel Strahlung er im Vergleich zu einem idealen Strahler, einem schwarzen Körper abgibt.

10. Verfahren nach einem der vorhergehenden Ansprüche, wobei die Aufbringung der keramischen Farbe (7) kameragesteuert im ersten Bereich (6) erfolgt, wobei die Kamera einen Unterschied zwischen dem entschichteten zweiten Bereich (6) und dem mit der polymeren Schutzschicht (5) der Dicke d versehenen Bereich detektiert.

11. Verfahren nach einem der vorhergehenden Ansprüche, wobei die Glasscheibe (1) zwischen 1 m² und 54 m² groß ist, bevorzugt zwischen 3 m² und 40 m², besonders bevorzugt zwischen 10 m² und 30 m² groß ist.

12. Verfahren nach einem der vorhergehenden Ansprüche, wobei der erste Bereich (6) eine Breite b aufweist zwischen 1 cm und 20 cm.

13. Verfahren nach einem der vorhergehenden Ansprüche, wobei die metallhaltige Beschichtung (4) eine IR-reflektierende Funktion hat und mindestens zwei silberhaltige Schichten sowie mindestens drei dielektrische Schichten enthält.

## Claims

1. Method for producing a coated and printed glass panel (1), at least comprising the steps
a) Providing a glass substrate (2) having a metal-containing coating (4) on at least one first surface (3.1) and a polymeric protective layer (5) with a thickness d arranged on this metal-containing coating (4),
b) Removing the polymeric protective layer (5) in a first region (6) using a carbon dioxide laser,
c) Removing the metal-containing coating (4) within the first region (6) only in a second region (9) using a solid-state laser such that an edge region (10) is created, in in which the metal-containing coating (4) is intact and in which the polymeric protective layer (5) was removed in step b),
d) Applying a ceramic ink (7) only in the first region (6),
e) Temperature treatment of the glass panel (1) at >600 °C, wherein
the polymeric protective layer (5) is removed on the entire first surface (3.1) and the ceramic ink (7) in the edge region (10) migrates into the metal-containing coating (4) and bonds with the first surface (3.1) of the glass panel (1),
wherein the first region (6) extends along at least one edge (12) of the glass panel (1) and, measured from the panel edge (12), has a width b between 0.5 cm and 30 cm.

2. Method according to claim 1, wherein in step d), the ceramic ink (7) is applied in the edge region (10) at a distance s of at least 0.5 mm from the remaining polymeric protective layer (5).

3. Method according to one of the preceding claims, wherein the polymeric protective layer (5) is not water-soluble and is produced from a composition that contains meth(acrylates).

4. Method according to one of the preceding claims, wherein the polymeric protective layer (5) has a thickness d of 1 µm to 30 µm, preferably 15 µm to 20 µm.

5. Method according to one of the preceding claims, wherein after step b), the thickness of the polymeric protective layer (5) in the edge region d_{Rand} is less than 1 µm, preferably less than 0.5 µm.

6. Method according to one of the preceding claims, wherein the glass panel (1) is thermally toughened during the temperature treatment, wherein in particular single-pane safety glass or partially toughened glass is obtained.

7. Method according to one of the preceding claims, wherein the ceramic ink (7) is applied with a roll coater or a digital printer.

8. Method according to one of the preceding claims, wherein the first region (6) is subjected to plasma cleaning before the application of the ceramic ink (7).

9. Method according to one of the preceding claims, wherein the region with the metal-containing coating (4) and the polymeric protective layer (5) has emissivity ε (epsilon) greater than 40%, preferably greater than 45%, wherein the emissivity of a body indicates how much radiation it emits compared to an ideal heat radiator, i.e., a black body.

10. Method according to one of the preceding claims, wherein the application of the ceramic ink (7) is done in the first region (6) under camera control, wherein the camera detects a difference between the de-coated second region (6) and the region provided with the polymeric protective layer (5) of the thickness d.

11. Method according to one of the preceding claims, wherein the glass panel (1) is between 1 m² and 54 m² in size, preferably between 3 m² and 40 m², particularly preferably between 10 m² and 30 m².

12. Method according to one of the preceding claims, wherein the first region (6) has a width b between 1 cm and 20 cm.

13. Method according to one of the preceding claims, wherein the metal-containing coating (4) has an IR-reflecting function and contains at least two silver-containing layers as well as at least three dielectric layers.

## Revendications

1. Procédé de fabrication d'un panneau de verre revêtu et imprimé (1), comprenant au moins les étapes suivantes
a) Mise à disposition d'un substrat en verre (2) avec un revêtement contenant du métal (4) sur au moins une première surface (3.1) et une couche protectrice polymère (5) avec une épaisseur d disposée sur ce revêtement contenant du métal (4),
b) enlever de la couche protectrice polymère (5) dans une première zone (6) à l'aide d'un laser à dioxyde de carbone,
c) éliminer du revêtement contenant du métal (4) dans la première région (6) uniquement dans une deuxième région (9) à l'aide d'un laser à solide de sorte qu'une région de bord (10) est créée, dans laquelle le revêtement contenant du métal (4) est intact et dans laquelle la couche protectrice polymère (5) a été éliminée à l'étape b),
d) appliquer d'une encre céramique (7) uniquement dans la première région (6),
e) traiter thermique du panneau de verre (1) à >600 °C, dans lequel la couche protectrice polymère (5) est enlevée sur toute la première surface (3.1) et l'encre céramique (7) dans la région du bord (10) migre dans le revêtement contenant du métal (4) et se lie à la première surface (3.1) du panneau de verre (1),
dans lequel la première région (6) s'étend le long d'au moins un bord (12) du panneau de verre (1) et, mesurée à partir du bord du panneau (12), a une largeur b comprise entre 0,5 cm et 30 cm.

2. Procédé selon la revendication 1, dans lequel à l'étape d), l'encre céramique (7) est appliquée dans la zone de bord (10) à une distance s d'au moins 0,5 mm de la couche protectrice polymère restante (5).

3. Procédé selon l'une des revendications précédentes, dans lequel la couche protectrice polymère (5) n'est pas soluble dans l'eau et est produite à partir d'une composition qui contient des méth(acrylates).

4. Procédé selon l'une des revendications précédentes, dans lequel la couche protectrice polymérique (5) présente une épaisseur d de 1 µm à 30 µm, de préférence de 15 µm à 20 µm.

5. Procédé selon l'une des revendications précédentes, dans lequel après l'étape b), l'épaisseur de la couche protectrice polymérique (5) dans la zone de bord d_{Rand} est inférieure à 1 µm, de préférence inférieure à 0,5 µm.

6. Procédé selon l'une des revendications précédentes, dans lequel le panneau de verre (1) est trempé thermiquement lors du traitement thermique, ce qui permet notamment d'obtenir un verre de sécurité monocouche ou un verre partiellement trempé.

7. Procédé selon l'une des revendications précédentes, dans lequel l'encre céramique (7) est appliquée à l'aide d'une vernisseuse à rouleau ou d'une imprimante numérique.

8. Procédé selon l'une des revendications précédentes, dans lequel la première région (6) est soumise à un nettoyage au plasma avant l'application de l'encre céramique (7).

9. Procédé selon l'une des revendications précédentes, dans lequel la région comportant le revêtement métallique (4) et la couche protectrice polymérique (5) présente une émissivité ε (epsilon) supérieure à 40%, de préférence supérieure à 45%, l'émissivité d'un corps indiquant la quantité de rayonnement qu'il émet par rapport à un radiateur thermique idéal, c'est-à-dire un corps noir.

10. Procédé selon l'une des revendications précédentes, dans lequel l'application de l'encre céramique (7) se fait dans la première région (6) sous le contrôle d'une caméra, la caméra détectant une différence entre la deuxième région (6) dévernie et la région pourvue de la couche protectrice polymère (5) d'épaisseur d.

11. Procédé selon l'une des revendications précédentes, dans lequel le panneau de verre (1) a une taille comprise entre 1 m² et 54 m², de préférence entre 3 m² et 40 m², de manière particulièrement préférée entre 10 m² et 30 m².

12. Procédé selon l'une des revendications précédentes, dans lequel la première région (6) présente une largeur b comprise entre 1 cm et 20 cm.

13. Procédé selon l'une des revendications précédentes, dans lequel le revêtement (4) contenant du métal a une fonction de réflexion IR et contient au moins deux couches contenant de l'argent ainsi qu'au moins trois couches diélectriques.
